# EUROPEAN PATENT SPECIFICATION

(11) **EP 2 736 301 B1**
(45) Date of publication and mention of the grant of the patent: **18.12.2019**
(21) Application number: 12781683.3
(22) Date of filing: 04.01.2012
(51) Int. Cl.: H04W 92/24, H04W 12/06, H04W 84/18, H04L 29/06, H04W 12/04

(54) **METHOD FOR COMMUNICATION BETWEEN GATEWAYS IN WSN, INITIATOR GATEWAY, AND TARGET GATEWAY**
VERFAHREN ZUR KOMMUNIKATION ZWISCHEN GATEWAYS IN WSN, INITIATORGATEWAY UND ZIELGATEWAY
PROCÉDÉ POUR UNE COMMUNICATION ENTRE DES PASSERELLES DANS UN RÉSEAU DE CAPTEURS SANS FIL, PASSERELLE INITIATEUR ET PASSERELLE CIBLE

(30) Priority: 20.07.2011 CN 201110204033
(43) Date of publication of application: 28.05.2014
(73) Proprietor: ZTE Corporation, Shenzhen, Guangdong 518057 (CN)
(72) Inventor: MA, Jingwang, Shenzhen Guangdong 518057 (CN)
(74) Representative: Mozzi, Matteo
(86) International application number: PCT/CN2012/070032
(87) International publication number: WO 2012/152070

(56) References cited:
- WO-A1-2010/117310
- CN-A- 101 072 096
- CN-A- 101 711 048
- GB-A- 2 452 251
- US-A1- 2006 190 458
- US-A1- 2007 198 675
- US-A1- 2008 263 647
- US-A1- 2009 146 833
- US-A1- 2009 296 724
- US-A1- 2010 045 425
- US-A1- 2010 183 152
- US-A1- 2010 293 378
- US-A1- 2010 332 831
- ÇAMTEPE S A ET AL: "Key Distribution Mechanisms for Wireless Sensor Networks: a Survey", TECHNICAL REPORT, RENSSELAER POLYTECHNIC INSTITUTE, DEPARTMENTOF COMPUTER SCIENCE, XX, XX, 23 March 2005 (2005-03-23), pages 1-27, XP002412961,

## Description

### Technical Field

The present invention relates to a communication technology in which a Wireless Sensor Network (WSN) is combined with a telecommunication network, in particular to a method for communication between gateways in a WSN, an initiating gateway and a target gateway.

### Background

As a product of computation, communication and sensor technologies, a WSN is a novel information acquisition and processing technology. Due to improvements of micro-manufacturing technologies, communication technologies and battery technologies in recent years, minute WSN terminals have capabilities of sensing, wireless communication and information processing. Such WSN terminals can not only sense and detect targets in an environment and change of the targets, but also process collected data and send the processed data to a data collection center by means of wireless transmission. These WSN terminals usually consist of several parts: power supply, a sensing component, an embedded processor, a memory, a communication component and software. The power supply provides power required by a sensor node to work normally. The sensing component is configured to sense and acquire external information and convert the external information into digital signals. The embedded processor is responsible for coordinating the operation of each part of a node, for example, processing if necessary and storing the external information acquired by the sensing component, controlling a working mode of the sensing component and the power supply, or the like. The communication component is responsible for communicating with other sensors or observers. The software provides essential software support, such as an embedded operating system, an embedded database system or the like, for the sensor node. In aid of various built-in sensing components of the WSN terminals, heat, infrared, sonar, radar and seismic wave signals in the environment all around are measured, thus various physical phenomena including temperature, humidity, noise, light intensity, pressure, soil constituent, and size, speed and direction of moving objects or the like are detected. The WSN terminals generally form a network by means of self-organization or pre-configuration. In terms of the communication mode, although various ways such as wired communication, wireless communication, infrared communication and optical communication can be employed, it is generally regarded that short-distance wireless low-power communication technologies fit the sensor network best, an the sensor network adopting the short-distance wireless low-power communication technologies is usually called WSN. At present, the wireless low-power communication technologies with relatively broad application include: Institute of Electrical and Electronics Engineers 802.15.4, Zigbee technology or the like. Similar to the Bluetooth, the Zigbee is a novel short-distance wireless technology.

The IEEE 802.15.4 is a low-speed wireless personal area network standard developed by the IEEE. The IEEE 802.15.4 specifies a standard for a physical layer and a media access control layer, and communication modules meeting the IEEE 802.15.4 standard have advantages of low cost, low power consumption and small size.

The Zigbee union is an organization engaged in development of reliable, low-cost and low-power-consumption monitoring and controlling products with a wireless network connection, on the basis of an open global standard. In the Zigbee standard, the physical layer and the media access control layer employ the IEEE 802.15.4 technology, while the intercommunity and the specification of a network layer, security management and application layer are developed by the Zigbee union. In the Zigbee standard, a Zigbee smart energy public applications profile and a Zigbee home automation public applications profile are respectively designed for business application and home application.

The micro-processing capability and wireless communication capability of the WSN terminals promise the WSN a broad application prospect, the application of the WSN includes military application, biologic and environmental monitoring, health application, home application, industrial control and monitoring, or the like.

Combination of the WSN and telecommunication networks, such as 2G mobile communication, 3G mobile communication, x Digital Subscriber line (xDSL), Fiber To The x (FTTx), broadband wireless access, satellite/microwave or the like, enables the WSN as extension of the existing networks to expand the capability of the communication network, so that the communication objects are expanded to physical world from human being. Therefore, the combination of the WSN and the telecommunication networks has excellent development prospect. With the combination of the WSN and the existing telecommunication networks, data sensed by the sensing network can be effectively transferred to a data center. By sorting and analyzing the data, the way that human acquires the data of the natural world can be greatly changed, simultaneously, centralized management of the WSN also can be achieved, so that the present problem that it is difficult to manage scattered WSNs is solved.

The combination of the WSN and the telecommunication network is to connect the WSN with the telecommunication network, so that the telecommunication network can be adopted to monitor and manage the WSN and services provided by the WSN, complete bearing of services and cooperative implementation, and expand services provided by the WSN. The combination of the WSN and the telecommunication network is usually to connect the WSN to a telecommunication network platform via a gateway device.

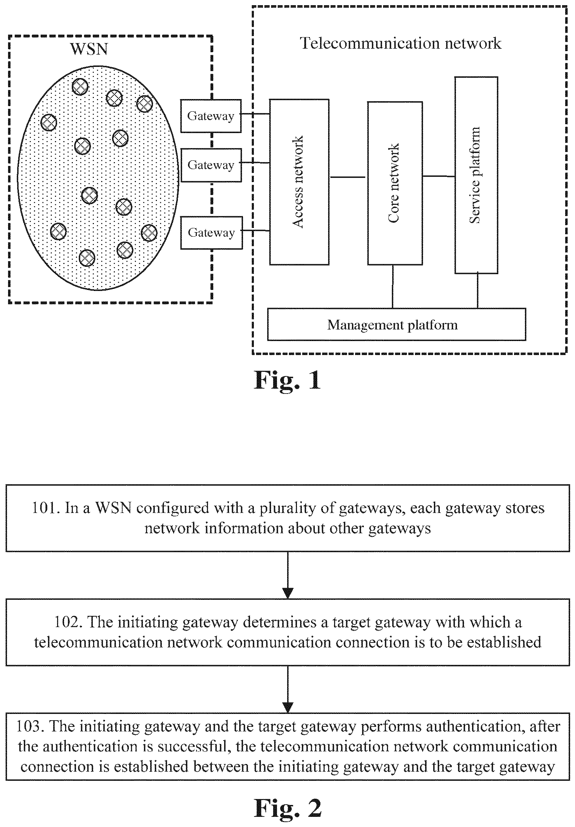

When the WSN is combined with the telecommunication work, the system architecture diagram of accessing a plurality of WSN terminals in the WSN to the telecommunication network is shown in Fig. 1. The shaded portions filled with cross lines in Fig. 1 represent a plurality of WSN terminals, the shaded portion filled with dots represents the area where the plurality of WSN terminals locate. The system architecture in Fig. 1 will be specifically illustrated below.

In Fig. 1, the WSN consists of a plurality of WSN terminals and a plurality of gateways. The plurality of WSN terminals and the plurality of gateways can form the WSN according to relevant technology standards of the WSN, and near-distance communication technologies that can be used for forming the WSN include: the Zigbee technology, the IEEE 802.15.4 standard or the like. The WSN is connected to the telecommunication network via a plurality of gateways to establish communication with a WSN management platform in the telecommunication network. A master-slave gateway working mode and a peer-to-peer working mode can be employed between the gateways.

The WSN is accessed to the telecommunication network via a plurality of gateways and connected with the access network, the core network, the service platform and the WSN management platform via the telecommunication network, so that the connection between the WSN and the telecommunication network is achieved.

The WSN terminals are sensor nodes in the WSN and are connected with the gateways by means of one hop or multiple hops. The WSN terminals are responsible for acquiring and uploading data and receiving and executing commands. The number of WSN terminals forming the WSN varies from several to hundreds, and the WSN terminals may perform networking in a way of star, tree or mesh according to actual demands, wherein some WSN terminals have strong networking and data forwarding capabilities. In the WSN, gateways are responsible for sending data reported by the WSN terminals to relevant network units in the telecommunication network, and then the relevant network units in the telecommunication network send relevant instructions to the WSN terminals via the gateways. Moreover, when the WSN employs the common IEEE 802.15.4 and Zigbee technology, the gateways are generally responsible for creating the WSN and performing management when the WSN terminals joins or leaves the WSN. Important data such as configuration information of the WSN terminals and service configuration information of the WSN are stored in the gateways.

Data reported by the WSN terminals need to be sent to the relevant network units in the telecommunication network via the gateways. However, in the existing WSN, only one gateway is usually configured to forward the data reported by the WSN terminals to the relevant network units in the telecommunication network. Therefore, when there are many WSN terminals in the WSN, or when WSN terminals report data frequently, great loads may be caused to the gateway in the WSN, as a result, data from the WSN terminals cannot be sent timely, and communication between the WSN terminals and the gateway is congested. In this case, the normal working of the WSN is influenced seriously. Besides, when managing the WSN terminals in the WSN, the network units at the telecommunication network side need to establish communication with the WSN terminals via the gateway in the WSN; if the network units at the telecommunication network side establish communication with the WSN terminals in the WSN via only one gateway, large bearing pressure also may be caused to the gateway, as a result, the network units at the telecommunication network side cannot establish communication with the WSN terminals in the WSN timely, which influences the normal operation of relevant services. Therefore, problems, such as how the relevant network units at the telecommunication network side communicate with the WSN terminals in the WSN, have to be considered. For this problem, one feasible solution is that the WSN is configured with a plurality of gateways, the WSN terminals in the WSN report data via these gateways and the network units at the telecommunication network side establish communication with the WSN terminals via these gateways.

In a WSN configured with a plurality of gateways, the gateways have to establish communication connection for coordination and cooperation with each other, and then transmit relevant messages and data via the established communication connection, so as to complete relevant functions. In order to be able to distinguish two gateways in communication, the gateway initiating communication is called an initiating gateway, the target gateway to which the initiating gateway initiates communication is called a target gateway. Each gateway is a node in the WSN and gateways can communicate with each other via the WSN. However, if communication between gateways is established inside the WSN and relevant messages and data are transmitted, the communication loads of the WSN will be increased, which may cause delay of data report by the WSN terminals, thereby bringing a bad effect on the relevant services in the WSN.

The US Patent Application US 2010/332831 A1 provides a method and apparatus for authenticating a sensor node in a sensor network.

The US Patent Application US 2010/045425 A1 provides a method for data transmission of sensors.

The US Patent Application US 2010/183152 A1 provides a network and method for initializing a trust center link key.

### Summary

In view of the above, the present invention provides a method for communication between gateways in a WSN, an initiating gateway and a target gateway, so that the increase of loads of the WSN caused by communication between gateways inside the WSN can be avoided, and security of the communication between gateways is guaranteed.

The features of the method and devices according to the present invention are defined in the independent claims, and the preferable features according to the present invention are defined in the dependent claims.

The technical solutions of the present invention are implemented as follows.

The present invention provides a method for communication between gateways in a WSN, including:
in a WSN configured with a plurality of gateways, an initiating gateway determining a target gateway with which a telecommunication network communication connection is to be established;
the initiating gateway and the target gateway performing authentication, after the authentication is successful, establishing the telecommunication network communication connection between the initiating gateway and the target gateway.

In the above solution, the initiating gateway determining the target gateway in a telecommunication network is:
in the WSN configured with the plurality of gateways, each gateway storing network information about other gateways in the WSN;
the initiating gateway determining the target gateway, with which the telecommunication network communication connection is to be established, according to the stored network information about other gateways in the WSN.

In the above solution, each gateway storing the network information about other gateways in the WSN is: a management platform and a gateway which creates the WSN storing the network information about each gateway in the WSN, the management platform or the gateway which creates the WSN sending the network information about all gateways in the WSN to each gateway in the WSN, and each gateway in the WSN storing the network information about other gateways except the gateway itself after receiving the network information about all gateways in the WSN.

In the above solution, the network information comprises an identity (ID) of a gateway, an address of the gateway in the telecommunication network and an address of the gateway in the WSN.

In the above solution, the initiating gateway and the target gateway performing the authentication is:
the initiating gateway and the target gateway performing mutual authentication according to authentication information stored in respective gateways, wherein the authentication information is a key used by the initiating gateway and the target gateway for communication in the WSN.

In the above solution, the initiating gateway and the target gateway performing the mutual authentication according to the authentication information stored in the respective gateways is:
after determining that the authentication information for performing communication with the target gateway is stored in the initiating gateway, the initiating gateway sending a connection establishment request to the target gateway;
the initiating gateway performing authentication for the target gateway by a symmetric-key-based authentication protocol according to the authentication information which is stored in the initiating gateway and is required for performing telecommunication network communication with the target gateway;
the target gateway which receives the connection establishment request performing authentication for the initiating gateway by the symmetric-key-based authentication protocol according to the authentication information which is stored in the target gateway and is used for performing communication with the initiating gateway.

In the above solution, the method further comprises: after determining that the authentication information for performing communication with the target gateway is not stored in the initiating gateway, the initiating gateway negotiating with the target gateway about the authentication information for performing the telecommunication network communication according to a communication technology employed in the WSN.

In the above solution, the initiating gateway negotiating the authentication information for performing the telecommunication network communication with the target gateway according to the communication technology employed in the WSN is:
when the WSN employs a Zigbee communication technology, the initiating gateway and the target gateway employing a symmetric-key key establishment protocol to determine a link key according to a master key which is possessed by both the initiating gateway and the target gateway, and storing the link key respectively as the authentication information between the initiating gateway and the target gateway.

In the above solution, the method further comprises: the communication between the initiating gateway and the target gateway in the telecommunication network employing an encryption key, which is used in the WSN, for encryption or decryption of data transmission.

The present invention provides an initiating gateway in a Wireless Sensor Network (WSN), the initiating gateway comprises: a target gateway determination module and a first communication establishment module; wherein
the target gateway determination module is configured to, in a WSN configured with a plurality of gateways, determine a target gateway with which a telecommunication network communication connection is to be established;
the first communication establishment module is configured to perform authentication with the target gateway, and after the authentication is successful, establish the telecommunication network communication connection.

In the above solution, the initiating gateway further comprises:
a first network information storing module, configured to store network information about other gateways in the WSN;
correspondingly, the target gateway determination module is configured to determine the target gateway, with which the telecommunication network communication connection is to be established, according to the network information stored by the first network information storing module about other gateways in the WSN.

In the above solution, the initiating gateway further comprises:
a first authentication information module, configured to notify the first communication establishment module after determining that authentication information for performing communication with the target gateway is stored in the first authentication information module;
correspondingly, the first communication establishment module is configured to perform the authentication with the target gateway according to the authentication information stored in the first authentication information module.

In the above solution, the first authentication information module is further configured to, after determining that the authentication information for performing communication with the target gateway is not stored in the first authentication information module, negotiate with the target gateway about the authentication information for performing telecommunication network communication according to a communication technology employed in the WSN.

The present invention provides a target gateway in a WSN, wherein the target gateway comprises: an initiating gateway determination module and a second communication establishment module; wherein
the initiating gateway determination module is configured to determine an initiating gateway with which a telecommunication network communication connection is to be established;
the second communication establishment module is configured to perform authentication with the initiating gateway, and after the authentication is successful, establish the telecommunication network communication connection.

In the above solution, the target gateway further comprises:
a second network information storing module, configured to store network information about other gateways in the WSN;
correspondingly, the initiating gateway determination module is configured to determine the initiating gateway, with which the telecommunication network communication connection is to be established, according to the network information stored by the second network information storing module about other gateways in the WSN.

In the above solution, the target gateway further comprises:
a second authentication information module, configured to store authentication information for performing communication with the initiating gateway;
correspondingly, the second communication establishment module is configured to perform the authentication with the initiating gateway according to the authentication information stored in the second authentication information module.

The present invention provides a method for communication between gateways in a WSN, an initiating gateway and a target gateway. In a WSN configured with a plurality of gateways, an initiating gateway determines a target gateway with which a telecommunication network communication connection is to be established; the initiating gateway and the target gateway performs authentication, after the authentication is successful, a telecommunication network communication connection is established between the initiating gateway and the target gateway. In this way, the increase of loads of the WSN caused by communication between gateways inside the WSN can be avoided, and the security of communication between gateways is guaranteed.

### Brief Description of the Drawings

Fig. 1 is a schematic diagram for the network architecture when there are a plurality of gateways in the related art;
Fig. 2 is a flow chart of a method for communication between gateways in a WSN in an embodiment of the present invention;
Fig. 3 is a structure diagram of an initiating gateway in a WSN in an embodiment of the present invention;
Fig. 4 is a structure diagram of a target gateway in a WSN in an embodiment of the present invention.

### Detailed Description of the Embodiments

The basic principle of the embodiments of the present invention is that: in a WSN configured with a plurality of gateways, an initiating gateway determines a target gateway with which a telecommunication network communication connection is to be established; the initiating gateway and the target gateway performs authentication, after the authentication is successful, a telecommunication network communication connection is established between the initiating gateway and the target gateway.

The present invention will be further described in details below with reference to drawings and specific embodiments.

An embodiment of the present invention provides a method for communication between gateways in a WSN, as shown in Fig. 2, the method includes the following steps.

Step 101: In a WSN configured with a plurality of gateways, each gateway stores network information about other gateways.

Specifically, a management platform and a gateway creating the WSN store the network information about each gateway in the WSN configured with a plurality of gateways, the management platform or the gateway creating the WSN sends the network information about all gateways in the WSN to each one of the gateways in the WSN, each one of the gateways in the WSN stores the network information about other gateways except the gateway itself after receiving the network information about each gateway in the WSN.

The management platform is arranged in the telecommunication network and can send network information about all gateways in the WSN to each one of the gateways in the WSN via the telecommunication network. The gateway creating the WSN can establish communication connections with other gateways via the WSN, and send the network information about all gateways in the WSN to each one of the gateways in the WSN.

The network information includes an identity (ID) of a gateway, an address of the gateway in the telecommunication network, an address of the gateway in the WSN or the like. The address of the gateway in the telecommunication network is generally an IP address.

Step 102: The initiating gateway determines a target gateway with which a telecommunication network communication connection is to be established.

In this step, the initiating gateway needs to establish a telecommunication network communication connection with other gateways in the WSN due to service requirements or the like, then the initiating gateway determines information such as the ID of the target gateway, the address of the target gateway in the telecommunication network and the address of the target gateway in the WSN according to the stored network information about all gateways in the WSN.

Step 103: The initiating gateway and the target gateway performs authentication, after the authentication is successful, the telecommunication network communication connection is established between the initiating gateway and the target gateway.

This step specifically includes Step 103a to Step 103d, which are described as follows.

Step 103a: After determining that authentication information for performing communication with the target gateway is stored in the initiating gateway, the initiating gateway sends a connection establishment request to the target gateway.

Specifically, the initiating gateway checks whether the authentication information required for performing telecommunication network communication with the target gateway is stored in the initiating gateway, if so, the initiating gateway sends a connection establishment request to the target gateway by a point-to-point communication protocol; otherwise, the initiating gateway negotiates with the target gateway about the authentication information required for performing telecommunication network communication according to a communication technology employed in the WSN.

The initiating gateway negotiates with the target gateway about the authentication information required for performing telecommunication network communication according to the communication technology employed in the WSN. For example, when the WSN employs the Zigbee communication technology, the initiating gateway and the target gateway employ a Symmetric-Key Key Establishment (SKKE) protocol to determine a link key according to a master key which is possessed by both the initiating gateway and the target gateway, wherein the link key serves as the authentication information between the initiating gateway and the target gateway.

The initiating gateway and the target gateway store the determined authentication information which can be used for performing telecommunication network communication between the initiating gateway and the target gateway within a period of time. In this way, when performing communication via the telecommunication network, the initiating gateway and the target gateway do not have to negotiate about the authentication information for performing communication in the telecommunication network each time.

The authentication information is generally a key used by the initiating gateway and the target gateway for performing communication in the WSN, for example, the above link key or the like.

Step 103b: The initiating gateway and the target gateway performs mutual authentication according to the authentication information stored in respective gateways.

Specifically, the initiating gateway performs authentication for the target gateway by a symmetric-key-based authentication protocol according to the authentication information which is stored in the initiating gateway and is required for performing telecommunication network communication with the target gateway; the target gateway receiving the connection establishment request acquires information, such as the ID of the initiating gateway and the address of the initiating gateway in the telecommunication network, according to the network information about all gateways in the WSN stored in the target gateway, and performs authentication for the initiating gateway by the symmetric-key-based authentication protocol according to the authentication information which is stored in the target gateway and is used for performing communication with the initiating gateway.

Step 103c: After the mutual authentication is successful, the target gateway sends a connection establishment completion response to the initiating gateway.

Step 103d: The initiating gateway receiving the connection establishment completion response performs communication with the target gateway in the telecommunication network.

In this step, the communication in the telecommunication network means that communication is performed according to information, such as the address, of the two parties in the telecommunication network.

Moreover, the communication between the initiating gateway and the target gateway in the telecommunication network employs an encryption key, which is used in the WSN, for encryption or decryption of data transmission.

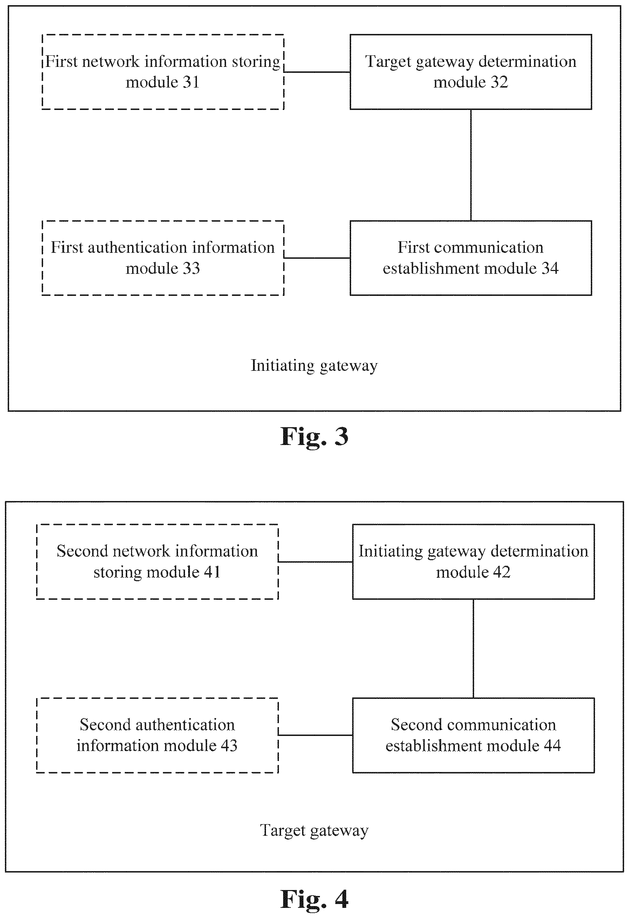

To implement the above method, an embodiment of the present invention also provides an initiating gateway in a WSN. As shown in Fig. 3, the initiating gateway includes: a target gateway determination module 32 and a first communication establishment module 34; wherein
the target gateway determination module 32 is configured to, in a WSN configured with a plurality of gateways, determine a target gateway with which a telecommunication network communication connection is to be established;
the first communication establishment module 34 is configured to perform authentication with the target gateway, and after the authentication is successful, establish the telecommunication network communication connection.

The initiating gateway further includes: a first network information storing module 31, configured to store network information about other gateways in the WSN;
correspondingly, the target gateway determination module 32 is configured to determine the target gateway with which the telecommunication network communication connection is to be established according to the network information stored by the first network information storing module 31 about other gateways in the WSN.

The initiating gateway further includes: a first authentication information module 33, configured to notify the first communication establishment module 34 after determining that authentication information for performing communication with the target gateway is stored in the first authentication information module;
correspondingly, the first communication establishment module 34 is configured to perform authentication with the target gateway according to the authentication information stored in the first authentication information module 33.

The first authentication information module 33 is further configured to, after determining that the authentication information for performing communication with the target gateway is not stored in the first authentication information module, negotiate with the target gateway about the authentication information required for telecommunication network communication according to a communication technology employed in the WSN.

The first authentication information module 33 negotiates with the target gateway about the authentication information required for the telecommunication network communication according to the communication technology employed in the WSN, specifically: when the WSN employs the Zigbee communication technology, the first authentication information module 33 and the target gateway employ a symmetric-key key establishment (SKKE) protocol to determine a link key according to a master key which is possessed by both the first authentication information module 33 and the target gateway, and store the link key respectively as the authentication information between the initiating gateway and the target gateway.

The first communication establishment module 34 is specifically configured to send a connection establishment request to the target gateway by a point-to-point communication protocol; perform authentication for the target gateway by a symmetric-key-based authentication protocol according to the authentication information stored in the first authentication information module 33 for performing telecommunication network communication with the target gateway; after the authentication is successful and a connection establishment completion response from the target gateway is received, perform communication with the target gateway in the telecommunication network.

The first communication establishment module 34 is further configured to perform communication with the target gateway in the telecommunication network, wherein an encryption key used in the WSN is employed for encryption or decryption of data transmission.

To implement the above method, an embodiment of the present invention also provides a target gateway in a WSN. As shown in Fig. 4, the target gateway includes: an initiating gateway determination module 42 and a second communication establishment module 44; wherein
the initiating gateway determination module 42 is configured to determine an initiating gateway with which a telecommunication network communication connection is to be established;
the second communication establishment module 44 is configured to perform authentication with the initiating gateway, and after the authentication is successful, establish the telecommunication network communication connection.

The target gateway further includes: a second network information storing module 41, configured to store network information about other gateways in the WSN; correspondingly, the initiating gateway determination module 42 is configured to determine the initiating gateway, with which the telecommunication network communication connection is to be established, according to the network information stored by the second network information storing module 41 about other gateways in the WSN.

The target gateway further includes: a second authentication information module 43, configured to store the authentication information for performing communication with the initiating gateway; correspondingly, the second communication establishment module 44 is configured to perform authentication with the initiating gateway according to the authentication information stored in the second authentication information module 43.

The second communication establishment module 44 is specifically configured to perform authentication for the initiating gateway by a symmetric-key-based authentication protocol according to the authentication information which is stored in the second authentication information module 43 and used for performing communication with the initiating gateway, and after the authentication is successful, send a connection establishment completion response to the initiating gateway. The second communication establishment module 44 is further configured to perform communication with the initiating gateway in the telecommunication network.

The second authentication information module 43 is further configured to, together with the initiating gateway, employ an SKKE protocol to determine a link key according to a master key which is possessed by both the second authentication information module 43 and the initiating gateway, and store the link key respectively as the authentication information between the initiating gateway and the target gateway.

The second communication establishment module 44 is further configured to perform communication with the initiating gateway in the telecommunication network, wherein an encryption key used in the WSN is employed for encryption or decryption of data transmission.

Above contents just describe preferred embodiments of the present invention and are not used for limiting the protection scope of the present invention.

## Claims

1. A method for communication between gateways in a Wireless Sensor Network WSN comprising:
in the WSN configured with a plurality of gateways, an initiating gateway determining a target gateway with which a telecommunication network communication connection is to be established;
the initiating gateway and the target gateway performing authentication, after the authentication is successful, establishing the telecommunication network communication connection between the initiating gateway and the target gateway;
wherein the initiating gateway determining the target gateway in a telecommunication network comprises: the initiating gateway receiving network information about all gateways in the WSN from a management platform or a gateway which creates the WSN, wherein the network information comprises addresses of the gateways in the telecommunication network and addresses of the gateways in the WSN; the initiating gateway storing the network information about other gateways except the initiating gateway itself after receiving the network information about all gateways in the WSN; the initiating gateway determining the target gateway, with which the telecommunication network communication connection is to be established, according to the stored network information about other gateways in the WSN;
wherein the initiating gateway and the target gateway performing authentication comprises: the initiating gateway and the target gateway performing mutual authentication according to authentication information stored in respective gateways; wherein the authentication information for performing the telecommunication network communication is negotiated by the initiating gateway with the target gateway based on the network information according to a communication technology employed in the WSN; wherein the communication in the telecommunication network means that the communication is performed according to address of the initiating gateway in the telecommunication network and address of the target gateway in the telecommunication network.

2. The method according to claim 1, wherein:
before the initiating gateway receiving network information about all gateways in the WSN from the management platform or the gateway which creates the WSN, the management platform and the gateway which creates the WSN storing the network information about each gateway in the WSN;
the network information further comprises an identity ID of the gateways.

3. The method according to claim 1, wherein the authentication information is a key used by the initiating gateway and the target gateway for communication in the WSN.

4. The method according to claim 1, wherein the initiating gateway and the target gateway performing the mutual authentication according to the authentication information stored in the respective gateways is:
after determining that the authentication information for performing communication with the target gateway is stored in the initiating gateway, the initiating gateway sending a connection establishment request to the target gateway;
the initiating gateway performing authentication for the target gateway by a symmetric-key-based authentication protocol according to the authentication information which is stored in the initiating gateway and is required for performing telecommunication network communication with the target gateway;
the target gateway which receives the connection establishment request performing authentication for the initiating gateway by the symmetric-key-based authentication protocol according to the authentication information which is stored in the target gateway and is used for performing communication with the initiating gateway.

5. The method according to claim 4, further comprising: after determining that the authentication information for performing communication with the target gateway is not stored in the initiating gateway, the initiating gateway negotiating with the target gateway about the authentication information for performing the telecommunication network communication according to the communication technology employed in the WSN.

6. The method according to claim 5, wherein the initiating gateway negotiating the authentication information for performing the telecommunication network communication with the target gateway according to the communication technology employed in the WSN is:
when the WSN employs a Zigbee communication technology, the initiating gateway and the target gateway employing a symmetric-key key establishment protocol to determine a link key according to a master key which is possessed by both the initiating gateway and the target gateway, and storing the link key respectively as the authentication information between the initiating gateway and the target gateway.

7. The method according to any one of claims 1 to 6, further comprising: the communication between the initiating gateway and the target gateway in the telecommunication network employing an encryption key, which is used in the WSN, for encryption or decryption of data transmission.

8. An initiating gateway in a Wireless Sensor Network WSN, the initiating gateway comprises: a target gateway determination module and a first communication establishment module; wherein
the target gateway determination module is configured to, in the WSN configured with a plurality of gateways, determine a target gateway with which a telecommunication network communication connection is to be established;
the first communication establishment module is configured to perform authentication with the target gateway, and after the authentication is successful, establish the telecommunication network communication connection;
the initiating gateway is further configured to receive network information about all gateways in the WSN from a management platform or a gateway which creates the WSN, wherein the network information comprises addresses of the gateways in the telecommunication network and addresses of the gateways in the WSN;
the initiating gateway further comprising: a first network information storing module, configured to store the network information about other gateways in the WSN;
the target gateway determination module is configured to determine the target gateway with which a telecommunication network communication connection is to be established by following: determining the target gateway, with which the telecommunication network communication connection is to be established, according to the network information stored by the first network information storing module about other gateways in the WSN;
wherein the first communication establishment module is configured to perform authentication with the target gateway by following steps: the initiating gateway and the target gateway performing mutual authentication according to authentication information stored in respective gateways; wherein the authentication information for performing the telecommunication network communication is negotiated by the initiating gateway with the target gateway based on the network information according to a communication technology employed in the WSN; wherein the communication in the telecommunication network means that the communication is performed according to address of the initiating gateway in the telecommunication network and address of the target gateway in the telecommunication network.

9. The initiating gateway according to claim 8, further comprising:
a first authentication information module, configured to notify the first communication establishment module after determining that authentication information for performing communication with the target gateway is stored in the first authentication information module;
correspondingly, the first communication establishment module is configured to perform the mutual authentication with the target gateway according to the authentication information stored in the first authentication information module.

10. The initiating gateway according to claim 9, wherein the first authentication information module is further configured to, after determining that the authentication information for performing communication with the target gateway is not stored in the first authentication information module, negotiate with the target gateway about the authentication information for performing telecommunication network communication according to the communication technology employed in the WSN.

11. A target gateway in a Wireless Sensor Network WSN, the target gateway comprises: an initiating gateway determination module and a second communication establishment module; wherein
the initiating gateway determination module is configured to determine an initiating gateway with which a telecommunication network communication connection is to be established;
the second communication establishment module is configured to perform authentication with the initiating gateway, and after the authentication is successful, establish the telecommunication network communication connection;
the target gateway is further configured to receive network information about all gateways in the WSN from a management platform or a gateway which creates the WSN, wherein the network information comprises addresses of the gateways in the telecommunication network and addresses of the gateways in the WSN;
the target gateway further comprising: a second network information storing module, configured to store the network information about other gateways in the WSN;
the initiating gateway determination module is configured to determine the initiating gateway with which a telecommunication network communication connection is to be established by following: determining the initiating gateway, with which the telecommunication network communication connection is to be established, according to the network information stored by the second network information storing module about other gateways in the WSN;
wherein the second communication establishment module is configured to perform authentication with the initiating gateway by following steps: the target gateway and the initiating gateway performing mutual authentication according to authentication information stored in respective gateways; wherein the authentication information for performing the telecommunication network communication is negotiated by the target gateway with the initiating gateway based on the network information according to a communication technology employed in the WSN; wherein the communication in the telecommunication network means that the communication is performed according to address of the initiating gateway in the telecommunication network and address of the target gateway in the telecommunication network.

12. The target gateway according to claim 11, further comprising:
a second authentication information module, configured to store the authentication information for performing communication with the initiating gateway;
correspondingly, the second communication establishment module is configured to perform the mutual authentication with the initiating gateway according to the authentication information stored in the second authentication information module.

## Patentansprüche

1. Verfahren zur Kommunikation zwischen Gateways in einem Drahtlossensornetz (Wireless Sensor Network, WSN), umfassend:
in dem mit einer Vielzahl von Gateways konfigurierten WSN Ermitteln eines Zielgateways, mit dem eine Telekommunikationsnetz-Kommunikationsverbindung eingerichtet werden soll, durch ein initiierendes Gateway;
Durchführen einer Authentifizierung durch das initiierende Gateway und das Zielgateway, nach erfolgreicher Authentifizierung Einrichten der Telekommunikationsnetz-Kommunikationsverbindung zwischen dem initiierenden Gateway und dem Zielgateway;
wobei das Ermitteln des Zielgateways in einem Telekommunikationsnetz durch das initiierende Gateway umfasst: durch das initiierende Gateway Empfangen von Netzinformationen über alle Gateways im WSN von einer Verwaltungsplattform oder einem Gateway, das das WSN erstellt, wobei die Netzinformationen Adressen der Gateways im Telekommunikationsnetz und Adressen der Gateways im WSN umfassen; durch das initiierende Gateway Speichern der Netzinformationen über andere Gateways mit Ausnahme des initiierenden Gateways selbst nach dem Empfangen der Netzinformationen über alle Gateways im WSN; durch das initiierende Gateway Ermitteln des Zielgateways, mit dem die Telekommunikationsnetz-Kommunikationsverbindung gemäß den gespeicherten Netzinformationen über andere Gateways im WSN aufgebaut werden soll;
wobei das Durchführen der Authentifizierung durch das initiierende Gateway und das Zielgateway umfasst: durch das initiierende Gateway und das Zielgateway Durchführen einer gegenseitigen Authentifizierung gemäß Authentifizierungsinformationen, die in jeweiligen Gateways gespeichert sind; wobei die Authentifizierungsinformationen zum Durchführen der Telekommunikationsnetzkommunikation durch das initiierende Gateway mit dem Zielgateway auf der Grundlage der Netzinformationen gemäß einer im WSN verwendeten Kommunikationstechnologie ausgehandelt werden; wobei die Kommunikation im Telekommunikationsnetz bedeutet, dass die Kommunikation gemäß der Adresse des initiierenden Gateways im Telekommunikationsnetz und der Adresse des Zielgateways im Telekommunikationsnetz durchgeführt wird.

2. Verfahren nach Anspruch 1, wobei: vor dem Empfangen von Netzwerkinformationen über alle Gateways im WSN von der Verwaltungsplattform oder dem Gateway, das das WSN erstellt, durch das initiierende Gateway die Verwaltungsplattform und das Gateway, das das WSN erstellt, die Netzinformationen über jedes Gateway im WSN speichern;
wobei die Netzinformationen ferner eine Identitätskennung ID der Gateways umfassen.

3. Verfahren nach Anspruch 1, wobei die Authentifizierungsinformationen ein Schlüssel sind, der durch das initiierende Gateway und das Zielgateway zur Kommunikation im WSN verwendet wird.

4. Verfahren nach Anspruch 1, wobei das Durchführen der gegenseitigen Authentifizierung durch das initiierende Gateway und das Zielgateway gemäß den in den jeweiligen Gateways gespeicherten Authentifizierungsinformationen besteht aus:
nach dem Feststellen, dass die Authentifizierungsinformationen zum Durchführen einer Kommunikation mit dem Zielgateway im initiierenden Gateway gespeichert sind, dem Senden einer Verbindungseinrichtungsanforderung an das Zielgateway durch das initiierende Gateway;
wobei das initiierende Gateway eine Authentifizierung für das Zielgateway durch ein Authentifizierungsprotokoll auf der Grundlage eines symmetrischen Schlüssels gemäß den Authentifizierungsinformationen durchführt, die im initiierenden Gateway gespeichert sind und zum Durchführen einer Telekommunikationsnetzkommunikation mit dem Zielgateway erforderlich sind;
durch das Zielgateway, das die Verbindungseinrichtungsanforderung empfängt, Durchführen einer Authentifizierung für das initiierende Gateway durch das auf einem symmetrischen Schlüssel beruhende Authentifizierungsprotokoll gemäß den Authentifizierungsinformationen, die im Zielgateway gespeichert sind und zum Durchführen einer Kommunikation mit dem initiierenden Gateway verwendet werden.

5. Verfahren nach Anspruch 4, ferner umfassend: nach dem Feststellen, dass die Authentifizierungsinformationen zum Durchführen einer Kommunikation mit dem Zielgateway nicht im initiierenden Gateway gespeichert sind, durch das initiierende Gateway mit dem Zielgateway Aushandeln der Authentifizierungsinformationen zum Durchführen der Telekommunikationsnetzkommunikation gemäß der im WSN verwendeten Kommunikationstechnologie.

6. Verfahren nach Anspruch 5, wobei das Aushandeln der Authentifizierungsinformationen durch das initiierende Gateway zum Durchführen der Telekommunikationsnetzkommunikation mit dem Zielgateway gemäß der im WSN verwendeten Kommunikationstechnologie besteht aus:
wenn das WSN eine Zigbee-Kommunikationstechnologie nutzt, durch initiierende Gateway und das Zielgateway Verwenden eines Einrichtungsprotokolls für symmetrische Schlüssel, um einen Verbindungsschlüssel gemäß einem Hauptschlüssel zu ermitteln, der sich im Besitz sowohl des initiierenden Gateways als auch des Zielgateways befindet, und jeweiliges Speichern des Verbindungsschlüssels als Authentifizierungsinformationen zwischen dem initiierenden Gateway und dem Zielgateway.

7. Verfahren nach einem der Ansprüche 1 bis 6, ferner umfassend: die Kommunikation zwischen dem initiierenden Gateway und dem Zielgateway im Telekommunikationsnetz, das einen Verschlüsselungsschlüssel verwendet, der im WSN zum Verschlüsseln oder Entschlüsseln der Datenübertragung verwendet wird.

8. Initiierendes Gateway in einem Drahtlossensornetz (WSN), wobei das initiierende Gateway umfasst: ein Ermittlungsmodul für Zielgateways und ein erstes Kommunikationseinrichtungsmodul; wobei
das Ermittlungsmodul für Zielgateways konfiguriert ist, um in dem mit einer Vielzahl von Gateways konfigurierten WSN ein Zielgateway zu ermitteln, mit dem eine Telekommunikationsnetz-Kommunikationsverbindung eingerichtet werden soll;
das erste Kommunikationseinrichtungsmodul konfiguriert ist, um eine Authentifizierung mit dem Zielgateway durchzuführen und nach erfolgreicher Authentifizierung die Telekommunikationsnetz-Kommunikationsverbindung einzurichten;
das initiierende Gateway ferner konfiguriert ist, um Netzinformationen über alle Gateways im WSN von einer Verwaltungsplattform oder einem Gateway zu empfangen, das den WSN erstellt, wobei die Netzinformationen Adressen der Gateways im Telekommunikationsnetz und Adressen der Gateways im WSN umfassen;
wobei das initiierende Gateway ferner umfasst: ein erstes Netzinformationsspeichermodul, das konfiguriert ist, um die Netzinformationen über andere Gateways im WSN zu speichern;
das Ermittlungsmodul für Zielgateways konfiguriert ist, um das Zielgateway zu ermitteln, mit dem eine Telekommunikationsnetz-Kommunikationsverbindung durch Folgendes eingerichtet werden soll: Ermitteln des Zielgateways, mit dem die Telekommunikationsnetz-Kommunikationsverbindung eingerichtet werden soll, gemäß den durch das erste Netzinformationsspeichermodul gespeicherten Netzinformationen über andere Gateways im WSN;
wobei das erste Kommunikationseinrichtungsmodul konfiguriert ist, um eine Authentifizierung mit dem Zielgateway durch folgende Schritte durchzuführen: durch das initiierende Gateway und das Zielgateway Durchführen einer gegenseitigen Authentifizierung gemäß in jeweiligen Gateways gespeicherten Authentifizierungsinformationen; wobei die Authentifizierungsinformationen zum Durchführen der Telekommunikationsnetzkommunikation durch das initiierende Gateway mit dem Zielgateway auf der Grundlage der Netzinformationen gemäß einer im WSN verwendeten Kommunikationstechnologie ausgehandelt werden; wobei die Kommunikation im Telekommunikationsnetz bedeutet, dass die Kommunikation gemäß der Adresse des initiierenden Gateways im Telekommunikationsnetz und der Adresse des Zielgateways im Telekommunikationsnetz durchgeführt wird.

9. Initiierendes Gateway nach Anspruch 8, ferner umfassend:
ein erstes Authentifizierungsinformationsmodul, das konfiguriert ist, um das erste Kommunikationseinrichtungsmodul zu benachrichtigen, nachdem festgestellt wurde, dass Authentifizierungsinformationen zum Durchführen einer Kommunikation mit dem Zielgateway im ersten Authentifizierungsinformationsmodul gespeichert sind;
wobei das erste Kommunikationseinrichtungsmodul dementsprechend konfiguriert wird, um die gegenseitige Authentifizierung mit dem Zielgateway gemäß den im ersten Authentifizierungsinformationsmodul gespeicherten Authentifizierungsinformationen durchzuführen.

10. Initiierendes Gateway nach Anspruch 9, wobei das erste Authentifizierungsinformationsmodul ferner konfiguriert ist, um nach dem Feststellen, dass die Authentifizierungsinformationen zum Durchführen einer Kommunikation mit dem Zielgateway nicht im ersten Authentifizierungsinformationsmodul gespeichert sind, mit dem Zielgateway die Authentifizierungsinformationen zum Durchführen einer Telekommunikationsnetzkommunikation gemäß der im WSN verwendeten Kommunikationstechnologie auszuhandeln.

11. Zielgateway in einem Drahtlossensornetz (WSN), wobei das Zielgateway umfasst: ein Ermittlungsmodul für initiierende Gateways und ein zweites Kommunikationseinrichtungsmodul; wobei
das Ermittlungsmodul für initiierende Gateways konfiguriert ist, um ein initiierendes Gateway zu ermitteln, mit dem eine Telekommunikationsnetz-Kommunikationsverbindung eingerichtet werden soll;
das zweites Kommunikationseinrichtungsmodul konfiguriert ist, um eine Authentifizierung mit dem initiierenden Gateway durchzuführen und nach erfolgreicher Authentifizierung die Telekommunikationsnetz-Kommunikationsverbindung einzurichten;
das Zielgateway ferner konfiguriert ist, um Netzinformationen über alle Gateways im WSN von einer Verwaltungsplattform oder einem Gateway zu empfangen, das das WSN erstellt, wobei die Netzinformationen Adressen der Gateways im Telekommunikationsnetz und Adressen der Gateways im WSN umfassen;
wobei das Zielgateway ferner umfasst: ein zweites Netzinformationsspeichermodul, das konfiguriert ist, um die Netzinformationen über andere Gateways im WSN zu speichern;
das Ermittlungsmodul für initiierende Gateways konfiguriert ist, um das initiierende Gateway zu ermitteln, mit dem eine Telekommunikationsnetz-Kommunikationsverbindung durch Folgendes eingerichtet werden soll: Ermitteln des initiierenden Gateways, mit dem die Telekommunikationsnetz-Kommunikationsverbindung eingerichtet werden soll, gemäß den durch das zweite Netzinformationsspeichermodul gespeicherten Netzinformationen über andere Gateways im WSN;
wobei das zweite Kommunikationseinrichtungsmodul konfiguriert ist, um eine Authentifizierung mit dem initiierenden Gateway durch die folgenden Schritte durchzuführen: durch das initiierende Gateway und das Zielgateway Durchführen einer gegenseitigen Authentifizierung gemäß Authentifizierungsinformationen, die in jeweiligen Gateways gespeichert sind; wobei die Authentifizierungsinformationen zum Durchführen der Telekommunikationsnetzkommunikation durch das Zielgateway mit dem initiierenden Gateway auf der Grundlage der Netzinformationen gemäß einer im WSN verwendeten Kommunikationstechnologie ausgehandelt werden; wobei die Kommunikation im Telekommunikationsnetz bedeutet, dass die Kommunikation gemäß der Adresse des initiierenden Gateways im Telekommunikationsnetz und der Adresse des Zielgateways im Telekommunikationsnetz durchgeführt wird.

12. Zielgateway nach Anspruch 11, ferner umfassend:
ein zweites Authentifizierungsinformationsmodul, das konfiguriert ist, um die Authentifizierungsinformationen zum Durchführen einer Kommunikation mit dem initiierenden Gateway zu speichern;
wobei das zweite Kommunikationseinrichtungsmodul dementsprechend konfiguriert wird, um die gegenseitige Authentifizierung mit dem initiierenden Gateway gemäß den im zweiten Authentifizierungsinformationsmodul gespeicherten Authentifizierungsinformationen durchzuführen.

## Revendications

1. Procédé de communication entre des passerelles dans un Réseau de capteurs sans fil, WSN, comprenant :
dans le WSN configuré avec une pluralité de passerelles, une passerelle initiatrice déterminant une passerelle cible avec laquelle doit être établie une connexion de communication de réseau de télécommunication ;
la passerelle initiatrice et la passerelle cible effectuant l'authentification, une fois l'authentification réussie, établissant la connexion de communication de réseau de télécommunication entre la passerelle initiatrice et la passerelle cible ;
dans lequel la passerelle initiatrice déterminant la passerelle cible dans un réseau de télécommunication comprend : la réception, par la passerelle initiatrice, d'informations de réseau concernant toutes les passerelles dans le réseau WSN à partir d'une plateforme de gestion ou d'une passerelle créant le WSN, les informations de réseau comprenant les adresses des passerelles dans le réseau de télécommunication et les adresses des passerelles dans le WSN ; le stockage, par la passerelle initiatrice, des informations de réseau concernant d'autres passerelles, à l'exception de la passerelle initiatrice elle-même, après avoir reçu les informations de réseau concernant toutes les passerelles dans le réseau WSN ; la détermination, par la passerelle initiatrice, de la passerelle cible avec laquelle la connexion de communication de réseau de télécommunication doit être établie, en fonction des informations de réseau stockées concernant les autres passerelles dans le réseau WSN ;
la passerelle initiatrice et la passerelle cible effectuant une authentification comprenant : la réalisation, par la passerelle initiatrice et par la passerelle cible, d'une authentification mutuelle conformément aux informations d'authentification stockées dans les passerelles respectives ; les informations d'authentification permettant d'effectuer la communication de réseau de télécommunication étant négociées par la passerelle initiatrice avec la passerelle cible en fonction des informations de réseau, conformément à une technologie de communication utilisée dans le WSN ; la communication dans le réseau de télécommunication signifiant que la communication est effectuée en fonction de l'adresse de la passerelle initiatrice dans le réseau de télécommunication et de l'adresse de la passerelle cible dans le réseau de télécommunication.

2. Procédé selon la revendication 1, dans lequel : avant que la passerelle initiatrice ne reçoive des informations de réseau concernant toutes les passerelles dans le WSN à partir de la plateforme de gestion ou de la passerelle créant le WSN, la plateforme de gestion et la passerelle créant le WSN stockant les informations de réseau concernant chaque passerelle dans le WSN ;
les informations de réseau comprennent en outre un identifiant d'identité ID des passerelles.

3. Procédé selon la revendication 1, dans lequel les informations d'authentification sont une clé utilisée par la passerelle initiatrice et par la passerelle cible pour la communication dans le WSN.

4. Procédé selon la revendication 1, dans lequel la réalisation, par la passerelle initiatrice et par la passerelle cible de l'authentification mutuelle en fonction des informations d'authentification stockées dans les passerelles respectives, comprend :
après avoir déterminé que les informations d'authentification permettant d'établir une communication avec la passerelle cible sont stockées dans la passerelle initiatrice, l'envoi, par la passerelle initiatrice, d'une demande d'établissement de connexion à la passerelle cible ;
la réalisation, par la passerelle initiatrice, de l'authentification de la passerelle cible par un protocole d'authentification basé sur une clé symétrique, conformément aux informations d'authentification stockées dans la passerelle initiatrice et nécessaires pour établir une communication de réseau de télécommunication avec la passerelle cible ;
la réalisation, par la passerelle cible qui reçoit la demande d'établissement de connexion, de l'authentification de la passerelle initiatrice par le protocole d'authentification basé sur une clé symétrique en fonction des informations d'authentification stockées dans la passerelle cible et utilisées pour réaliser une communication avec la passerelle initiatrice.

5. Procédé selon la revendication 4, comprenant en outre : après avoir déterminé que les informations d'authentification destinées à réaliser une communication avec la passerelle cible ne sont pas stockées dans la passerelle initiatrice, la négociation, par la passerelle initiatrice avec la passerelle cible, concernant les informations d'authentification permettant d'effectuer la communication de réseau de télécommunication selon à la technologie de communication employée dans le WSN.

6. Procédé selon la revendication 5, dans lequel la réalisation, par la passerelle initiatrice des informations d'authentification permettant de réaliser la communication de réseau de télécommunication avec la passerelle cible conformément à la technologie de communication utilisée dans le WSN comprend :
lorsque le WSN utilise une technologie de communication Zigbee, l'utilisation, par la passerelle initiatrice et par la passerelle cible, d'un protocole d'établissement de clé à clé symétrique pour déterminer une clé de liaison en fonction d'une clé maître détenue à la fois par la passerelle initiatrice et par la passerelle cible et le stockage de la clé de liaison, respectivement, sous forme d'informations d'authentification entre la passerelle initiatrice et la passerelle cible.

7. Procédé selon l'une quelconque des revendications 1 à 6, comprenant en outre : l'emploi, pour la communication entre la passerelle initiatrice et la passerelle cible dans le réseau de télécommunication, d'une clé de cryptage, qui est utilisée dans le WSN pour le cryptage ou pour le décryptage de la transmission de données.

8. Passerelle initiatrice d'un Réseau de capteurs sans fil WSN, la passerelle initiatrice comprenant : un module de détermination de passerelle cible et un premier module d'établissement de communication ;
le module de détermination de passerelle cible étant configuré pour, dans le WSN configuré avec une pluralité de passerelles, déterminer une passerelle cible avec laquelle doit être établie une connexion de communication de réseau de télécommunication ;
le premier module d'établissement de communication étant configuré pour effectuer une authentification avec la passerelle cible et, une fois l'authentification réussie, pour établir la connexion de communication de réseau de télécommunication ;
la passerelle initiatrice est en outre configurée pour recevoir des informations de réseau concernant toutes les passerelles dans le WSN à partir d'une plateforme de gestion ou d'une passerelle créant le WSN, les informations de réseau comprenant des adresses des passerelles dans le réseau de télécommunication et des adresses des passerelles dans le WSN ;
la passerelle initiatrice comprenant en outre : un premier module de stockage d'informations de réseau, configuré pour stocker les informations de réseau concernant d'autres passerelles dans le WSN ;
le module de détermination de passerelle cible étant configuré pour déterminer la passerelle cible avec laquelle une connexion de communication de réseau de télécommunication doit être établie en procédant comme suit : en déterminant la passerelle cible avec laquelle doit être établie la connexion de communication de réseau de télécommunication, en fonction des informations de réseau stockées par le premier module de stockage d'informations de réseau concernant d'autres passerelles dans le WSN ;
le premier module d'établissement de communication étant configuré pour effectuer une authentification avec la passerelle cible en procédant comme suit : la passerelle initiatrice et la passerelle cible effectuent une authentification mutuelle conformément aux informations d'authentification stockées dans les passerelles respectives ; les informations d'authentification permettant d'établir la communication de réseau de télécommunication étant négociées par la passerelle initiatrice avec la passerelle cible en fonction des informations de réseau, conformément à une technologie de communication employée dans le WSN ; la communication dans le réseau de télécommunication signifiant que la communication est effectuée en fonction de l'adresse de la passerelle initiatrice dans le réseau de télécommunication et de l'adresse de la passerelle cible dans le réseau de télécommunication.

9. Passerelle initiatrice selon la revendication 8, comportant en outre :
un premier module d'informations d'authentification, configuré pour notifier le premier module d'établissement de communication après avoir déterminé que des informations d'authentification, permettant de réaliser une communication avec la passerelle cible, sont stockées dans le premier module d'informations d'authentification ;
de manière correspondante, le premier module d'établissement de communication est configuré pour effectuer l'authentification mutuelle avec la passerelle cible en fonction des informations d'authentification stockées dans le premier module d'informations d'authentification.

10. Passerelle initiatrice selon la revendication 9, dans laquelle le premier module d'informations d'authentification est en outre configuré pour, après avoir déterminé que les informations d'authentification permettant de réaliser une communication avec la passerelle cible ne sont pas stockées dans le premier module d'informations d'authentification, négocier avec la passerelle cible les informations d'authentification permettant de réaliser une communication de réseau de télécommunication conformément à la technologie de communication employée dans le WSN.

11. Passerelle cible d'un Réseau de capteurs sans fil WSN, la passerelle cible comprenant : un module de détermination de passerelle initiatrice et un second module d'établissement de communication ;
le module de détermination de passerelle initiatrice étant configuré pour déterminer une passerelle initiatrice avec laquelle doit être établie une connexion de communication de réseau de télécommunication ;
le second module d'établissement de communication est configuré pour effectuer une authentification auprès de la passerelle initiatrice et, une fois l'authentification réussie, pour établir la connexion de communication de réseau de télécommunication ;
la passerelle cible est en outre configurée pour recevoir des informations de réseau concernant toutes les passerelles dans le WSN provenant d'une plateforme de gestion ou d'une passerelle créant le WSN, les informations de réseau comprenant des adresses des passerelles dans le réseau de télécommunication et des adresses des passerelles dans le WSN ;
la passerelle cible comprenant en outre : un second module de stockage d'informations de réseau, configuré pour stocker les informations de réseau concernant d'autres passerelles dans le WSN ;
le module de détermination de passerelle initiatrice est configuré pour déterminer la passerelle initiatrice avec laquelle doit être établie une connexion de communication de réseau de télécommunication en procédant comme suit : en déterminant la passerelle initiatrice avec laquelle doit être établie la connexion de communication de réseau de télécommunication, en fonction des informations de réseau stockées par le second module de stockage d'informations de réseau concernant d'autres passerelles dans le WSN ;
le second module d'établissement de communication étant configuré pour effectuer une authentification avec la passerelle initiatrice en procédant comme suit : la passerelle cible et la passerelle initiatrice effectuent une authentification mutuelle, conformément aux informations d'authentification stockées dans les passerelles respectives ; les informations d'authentification permettant d'effectuer la communication de réseau de télécommunication sont négociées par la passerelle cible avec la passerelle initiatrice en fonction des informations de réseau, conformément à une technologie de communication utilisée dans le WSN ; la communication dans le réseau de télécommunication signifiant que la communication a lieu en fonction de l'adresse de la passerelle initiatrice dans le réseau de télécommunication et de l'adresse de la passerelle cible dans le réseau de télécommunication.

12. Passerelle cible selon la revendication 11, comportant en outre :
un second module d'informations d'authentification, configuré pour stocker les informations d'authentification pour effectuer une communication avec la passerelle initiatrice ;
de manière correspondante, le second module d'établissement de communication est configuré pour effectuer l'authentification mutuelle avec la passerelle initiatrice en fonction des informations d'authentification stockées dans le second module d'informations d'authentification.
